# FASCICULE DE BREVET EUROPEEN

(11) **EP 1 172 396 B1**
(45) Date de publication et mention de la délivrance du brevet: **02.08.2006**
(21) Numéro de dépôt: 01401702.4
(22) Date de dépôt: 27.06.2001
(51) Int. Cl.: C08G 69/44

(54) **Procédé de préparation de poudres poreuses de copolyesteramides et poudres ainsi obtenues**
Verfahren zur Herstellung von porösen Copolyesteramidepulver und die so hergestellten Pulver
Process for the preparation of porous copolyesteramides powders and the powders therefrom

(30) Priorité: 11.07.2000 FR 0009048
(43) Date de publication de la demande: 16.01.2002
(73) Titulaire: Arkema France, 92800 Puteaux (FR)
(72) Inventeur: Le Crom, Christophe, 64000 Pau (FR); Guerin, Roland, 64000 Pau (FR)
(74) Mandataire: Neel, Henry

(56) Documents cités:
- FR-A- 1 528 292
- FR-A- 2 576 602
- FR-A- 2 619 385
- GB-A- 1 099 456

## Description

### [Domaine de l'invention]

La présente invention concerne un procédé de préparation de poudres poreuses de copolyesteramides et les poudres ainsi obtenues. Il s'agit d'une synthèse de type anionique à partir d'au moins un lactame et d'au moins une lactone. Les poudres obtenues ont un diamètre compris entre 1 µm et 200 µm, une surface spécifique comprise entre 1 et 25 m2/g et une température de fusion comprise entre 80°C et 220°C. Ces poudres sont utiles pour faire des papiers transferts c'est à dire des structures comprenant (i) un support fibreux et une couche d'adhésif thermofusible et (ii) contenant ces poudres. On imprime un dessin ou un texte sur ce papier, l'encre est retenue dans la porosité des poudres puis on presse à chaud ce papier transfert sur un textile et le dessin ou le texte est transferré sur le textile. Ces poudres sont aussi utiles dans des compositions cosmétiques.

### [l'art antérieur et le problème technique]

Le brevet EP 192 515 décrit la polymérisation anionique d'un lactame dans un solvant en présence d'un N,N'- alkylène bis amide. On obtient une poudre de polyamide dont la température de fusion est celle du PA 6 ou du PA 12 c'est à dire respectivement 220°C et 180°C. L'utilisation conjointe de lactames 6 et 12 permet d'abaisser le point de fusion vers 140°C lorsque la composition en lactames est de 50/50. Cette température est cependant parfois trop élevée pour certaines applications.

Le brevet EP 303530 décrit un procédé très voisin du précédent, les particules de poudre sont constituées de lamelles et ont une structure dite "rose des sables" (gypsum flower structure). La température de fusion est la même que dans l'art antérieur précédent.

Le brevet anglais GB 1,099,184 de 1966 décrit la synthèse des copolymères lactames/lactones par polymérisation anionique dans un procédé masse. L'auteur de ce brevet décrit de façon plus précise ces synthèses dans une série d'articles de la revue European Polymer Journal :
- 20(3), 241-247, 1984
- 20(6), 529-537, 1984
- 20(6), 539-547, 1984
- 20(6), 549-557, 1984
Ces polyesteramides obtenus par ces procédés masse présentent des points de fusion inférieurs à 140°C mais doivent donc faire l'objet d'un traitement tel que le broyage pour être utilisés sous forme de poudre. Cette étape est coûteuse et ne permet pas la préparation de poudres fines de diamètre < 50µm. En outre, ces poudres ne présentent aucune porosité.

La demande de brevet JP 08 325 406 A publiée le 10 dec 1996 décrit des particules de copolymère d'esteramide aliphatique (aliphatic ester-amide copolymer) par dissolution dans un solvant suivie d'une précipitation. Des particules de 0,5 à 50µm sont décrites, cependant la granulométrie est très dispersée et beaucoup de particules sont agglomérées.

Le brevet FR 1.528.292 concerne la préparation de copolymères de lactame-lactone en présence d'un inducteur employé seul ou conjointement avec un promoteur en l'absence ou en présence d'un solvant inerte au moins.

On a maintenant trouvé qu'en copolymérisant au moins un lactame et au moins une lactone en milieu solvant (dans lequel le lactame est soluble et les poudres insolubles) et en catalyse anionique on obtenait des poudres ayant un diamètre compris entre 1 µm et 200 µm, une surface spécifique comprise entre 1 et 25 m2/g et une température de fusion comprise entre 80°C et 220°C. Un autre avantage du procédé de l'invention est que la granulométrie des poudres est très étroite, c'est à dire qu'au moins 85% en nombre des particules et avantageusement 90% sont dans un intervalle de 5µm. Un autre avantage de ce procédé est que les particules sont poreuses. Par ailleurs, la présence de séquences polycaprolactones confère aux poudres un caractère biodégradable.

### [Brève description de l'invention]

La présente invention concerne un procédé de préparation de poudres de copolyesteramides par polymérisation anionique dans lequel on copolymérise en solution dans un solvant au moins un lactame et au moins une lactone en présence d'un catalyseur et d'un activateur, le solvant étant un solvant du lactame et les poudres de copolyesteramides étant insolubles dans ce solvant

On introduit d'abord le solvant et le lactame séparément ou simultanément puis après l'élimination de l'eau éventuelle on introduit le catalyseur et ensuite on introduit l'activateur et la lactone soit en continu soit par paquets simultanément, soit alternativement un paquet d'activateur et un paquet de lactone, soit alternativement un débit continu d'activateur puis un débit continu de lactone soit toute combinaison de ces possibilités.

Selon un mode de réalisation, le lactame est choisi parmi le caprolactame et le lauryllactame.

Selon un mode de réalisation, la lactone est choisie parmi la caprolactone, la valérolactone et la butyrolactone.

Selon un mode de réalisation, le solvant est une coupe d'hydrocarbures paraffiniques dont la plage d'ébullition se trouve entre 140 et 170°C.

Selon un mode de réalisation, le catalyseur est choisi parmi le sodium, le potassium, les hydrures et les hydroxydes de métaux alcalins et les alcoolates de métaux alcalins.

Selon un mode de réalisation, l'activateur est choisi parmi les lactames-N-carboxyanilides, les isocyanates, les carbodi-imides, les cyanimides, les acyl-lactames, les triazines, les urées, les imides-N-sustituées et les esters.

Selon un mode de réalisation, on opère à la pression atmosphérique et à une température comprise entre 20°C et la température d'ébullition du solvant.

Selon un mode de réalisation, on copolymérise au moins deux lactames et au moins une lactone.

Selon un mode de réalisation, il s'agit du caprolactame, du lauryllactame et de la caprolactone.

Selon un mode de réalisation, on effectue la copolymérisation en présence d'une charge organique ou minérale finement divisée.

Selon un mode de réalisation, on effectue la copolymérisation en présence d'au moins une amide de formule R1-NH-CO-R2 dans laquelle R1 peut être remplacé par un radical R3-CO-NH- ou R3-O- et dans laquelle R1, R2, R3 désignent un radical aryle, alkyle ou cycloalkyle.

Selon un mode de réalisation, l'amide est l'éthylène bis stéaramide (EBS) ou l'éthylène bis oléamide.

L'invention concerne également une poudre de copolyesteramide comprenant en moles (le total étant à 100 %) :
■ 30 à 46 % de caprolactame,
■ 30 à 46 % de lauryllactame,
■ 8 à 40 % de caprolactone,
et qui ont un diamètre compris entre 1µm et 200µm, une surface spécifique comprise entre 1 et 25 m2/g.

Selon un mode de réalisation, le diamètre est compris entre 1 et 60µm.

Selon un mode de réalisation, le diamètre est compris entre 2 et 12µm.

Selon un mode de réalisation, la surface est comprise entre 4 et 22 m2/g.

L'invention a trait aussi à l'utilisation de poudre décrite précédemment en particulier dans les papiers transferts, les cosmétiques, les revêtements.

Selon un mode de réalisation, les poudres sont utilisées comme additif dans des caoutchoucs ou dans des poudres où elles sont utiles comme lubrifiant pendant l'injection dans un moule avant le frittage.

### [Description détaillée de l'invention]

**A titre d'exemple de lactames** on peut citer ceux ayant de 3 à 12 atomes de carbone sur le cycle principal et pouvant être substitués. On peut citer par exemple le β,β-diméthylpropiolactame, le α,α-diméthylpropiolactame, l'amylolactame, le caprolactame, le capryllactame et le lauryllactame. On utilise avantageusement le caprolactame et le lauryllactame.

**A titre d'exemple de lactones** on peut citer la caprolactone, la valérolactone et la butyrolactone. On utilise avantageusement la caprolactone.

**S'agissant du solvant** c'est un solvant du lactame par contre la poudre de copolyesteramide est insoluble dans ce solvant. De tels solvants sont cités dans le brevet EP 192 515. Le solvant est avantageusement une coupe d'hydrocarbures paraffiniques dont la plage d'ébullition se trouve entre 140 et 170°C .

**Le catalyseur** est une base suffisamment forte pour créer un lactamate. A titre d'exemple de catalyseur on peut citer le sodium, le potassium, les hydrures et les hydroxydes de métaux alcalins, les alcoolates de métaux alcalins tels que le méthylate ou l'éthylate de sodium.

**S'agissant de l'activateur** on désigne ainsi tout produit capable de provoquer et/ou accélérer la polymérisation, on peut citer à titre d'exemple les lactames-N-carboxyanilides, les isocyanates, les carbodi-imides, les cyanimides, les acyl-lactames, les triazines, les urées, les imides-N-sustituées, les esters. L'activateur peut être formé in situ, par exemple un acyl-lactame est obtenu en ajoutant un isocyanate d'alkyle dans le lactame.

Le rapport du catalyseur sur l'activateur, en moles, peut être compris entre 0.2 et 2 et de préférence entre 0,8 et 1,2. La proportion de catalyseur dans le lactame peut être comprise entre 0,1 et 5 moles pour 100 moles de monomères (lactames et lactones ) et de préférence entre 0,3 et 1,5.

Les proportions de lactame et de lactone peuvent être quelconques, le procédé fonctionne avec toutes proportions, cependant on explique plus loin l'intérêt de choisir des proportions pour ajuster la température de fusion.

Le procédé peut être effectué dans un réacteur agité muni d'un dispositif de chauffage par une double enveloppe ou un serpentin, d'un système de vidange tel qu'une vanne de fond et d'un dispositif d'introduction des réactifs balayé à l'azote sec. On peut opérer en continu ou en discontinu (batch).

Avantageusement on opère en discontinu, on introduit le solvant puis simultanément ou successivement le lactame, le catalyseur, l'activateur et la lactone. Il est recommandé d'introduire d'abord le solvant et le lactame (ou le lactame en solution dans le solvant) puis d'éliminer toute trace d'eau et quand le milieu est parfaitement sec d'introduire le catalyseur. On peut éliminer les traces d'eau par distillation azéotropique. On ajoute ensuite l'activateur et la lactone. On opère à la pression atmosphérique et à une température comprise entre 20°C et la température d'ébullition du solvant. La durée de la réaction est fonction de la température et diminue quand la température augmente, elle est habituellement comprise entre 1h et 12h. La réaction est totale tous les monomères sont consommés et constituent la poudre de copolyesteramides. A l'issue de la réaction on sépare le solvant et la poudre par filtration ou essorage puis la poudre est sechée.

Selon une forme avantageuse de l'invention on introduit d'abord le solvant et le lactame séparement ou simultanément puis après l'élimination de l'eau éventuelle on introduit le catalyseur. Ensuite on introduit l'activateur et la lactone soit en continu soit par paquets simultanément, soit alternativement un paquet d'activateur et un paquet de lactone, soit alternativement un débit continu d'activateur puis un débit continu de lactone soit toute combinaison de ces possibilités. Bien que des étapes du procédé soient continues on le qualifie de "discontinu" parce qu'il se décompose en cycles commençant avec l'introduction du solvant dans le réacteur et se terminant avec la séparation de la poudre et du solvant.

**Selon une première forme préférée** de l'invention on copolymérise au moins deux lactames et au moins une lactone. avantageusement il s'agit du caprolactame, du lauryllactame et de la caprolactone.

**Selon une deuxième forme préférée** de l'invention on effectue la copolymérisation en présence d'une charge organique-ou minérale finement divisée (0.01µm à 10µm). Cette charge peut être ajoutée dans le réacteur après l'introduction du solvant ou avant l'introduction de la lactone. Cette charge peut par exemple être de la silice . La quantité de charge peut être de 0.1 % à 10% du poids de lactames.

**Selon une troisième forme préférée** de l'invention on effectue la copolymérisation en présence d'une N,N'- alkylène bis amide tel que l'éthylène bis stéaramide (EBS) décrit dans EP 192 515 ou d'une façon générale, les amides de formule R1-NH-CO-R2 dans laquelle R1 peut être remplacé par un radical R3-CO-NH- ou R3-O- et dans laquelle R1, R2, R3 désignent un radical aryle, alkyle ou cycloalkyle.

S'agissant plus particulièrement des amides de formule R1-NH-CO-R2 et des radicaux R1, R2, R3 des exemples de radicaux aryles peuvent être le phényle, le para-tolyle, l'alpha-naphtyle. Des exemples d' alkyles peuvent être de radicaux méthyle, éthyle, n-propyle, et n-butyle, et un exemple d'un radical cycloalkyle est le cyclohexyle. Les amides préférés sont ceux dans lesquels R1 et R2 identiques ou différents est le phényle ou un alkyle ayant au plus 5 atomes de carbone, R1 pouvant être remplacé par R3-O- et R3 étant un alkyle ayant au plus 5 atomes de carbone. On peut citer par exemple l'acétanilide, le benzanilide, le N-méthyl-acetamide, le N-éthyl-acetamide, le N-méthyl-formamide et le (4-éthoxy-phényl)acétamide. D'autres amides préférés sont les alkylènes bis amides tels que l'éthylène bis stéaramide (EBS) et l'éthylène bis oléamide. On ne sortirait pas du cadre de l'invention en effectuant la polymérisation en présence de deux ou plusieurs amides.

**Les poudres obtenues dans le procédé de l'invention** ont un diamètre compris entre 1 µm et 200 µm, une surface spécifique comprise entre 1 et 25 m2/g et une température de fusion comprise entre 80°C et 220°C.
La température de fusion est mesurée par DSC (abréviation de Differential Scanning Calorimetry).

Le poids moléculaire de la poudre de copolyesteramide obtenu est déterminé par mesure de la viscosité inhérente, à 25°C, d'une solution de 0,5g de cette poudre dans 100g dé m-crésol.

La granulométrie est mesurée au MALVERN.

La température de fusion des poudres est déterminée essentiellement par la proportion du lactame et de la lactone et dans une-faible mesure par la température de synthèse
Plus la proportion de lactone est élevée plus la température de fusion est basse, au delà de 30% molaire de lactone la poudre de copolyesteramide est amorphe, le terme "température de fusion" est à remplacer par "température de transition vitreuse" Tg.

En choisissant les proportions de lactone et du lactame ou mieux des lactames on peut ajuster la température de fusion.

La taille des particules est déterminée par le choix de paramètres tels la vitesse d'agitation (plus on augmente la vitesse, plus la taille des particules diminue) , le rapport monomère/solvant (diminution de la taille des particules lorsque la concentration augmente), ou encore la quantité de charge.

La surface spécifique apparente diminue d'autant plus qu'on retarde l'injection de lactone après le début de l'injection de l'activateur.
Ce retard à l'injection de la lactone conduit également à une augmentation de la viscosité à l'état fondu.

Avantageusement la taille est comprise entre 1 et 60 µm et de préférence entre 2 et 12 µm. Avantageusement la surface spécifique est comprise entre 4 et 22 m2/g.

**La présente invention concerne aussi à titre de nouveau produit des poudres de copolyesteramides** comprenant en moles (le total étant 100%) :
■ 1 à 98% d'un lactame,
■ 1 à 98% d'un autre lactame,
■ 1 à 98% d'une lactone,
et qui ont un diamètre compris entre 1 µm et 200 µm, une surface spécifique comprise entre 1 et 25 m²/g.

Ces poudres peuvent être fabriquées par le procédé décrit plus haut et constituant l'objet principal de cette description.

La température de fusion est fonction de la proportion de lactames et de la lactone. Avantageusement les poudres sont constituées de caprolactame, de lauryllactame et de caprolactone. Les proportions respectives de ces constituants sont respectivement en moles (le total étant 100%) :
30à46% / 30à46% / 8à40%
Ces proportions conduisent à une température de fusion de 123 à 134°C.

Avantageusement la taille est comprise entre 1 et 60 µm et de préférence entre 2 et 12 µm. Avantageusement la surface specifique est comprise entre 4 et 22 m2/g.

L'invention concerne aussi les utilisations des poudres décrites plus haut. On peut citer les papiers transferts, les cosmétiques, les revêtements. Dans les cosmétiques ces poudres apportent un toucher et elles peuvent aussi contenir des parfums. Dans les revêtements elles sont par exemple ajoutées dans des peintures polyuréthanes ou polyesters dans la technique du revêtement de toles métalliques (coil coating). On peut encore citer l'utilisation comme additif dans des caoutchoucs ou dans des poudres de métaux ou d'autres matériaux qu'on veut fritter dans lesquels elles sont utiles comme lubrifiant pendant l'injection dans un moule avant le frittage.

### [Exemples]

Dans les exemples ci-dessous qui ont pour but d'illustrer l'invention sans toutefois la limiter, les essais ont été réalisés dans un réacteur d'une capacité de 5 litres, muni d'un agitateur à pales, d'une double enveloppe dans laquelle circule de l'huile de chauffage, d'un système de vidange par le fond et d'un sas d'introduction des réactifs balayé à l'azote sec. Un dispositif de distillation azéotropique sous vide permet d'éliminer toute trace d'eau du milieu réactionnel.

### EXEMPLE 1

On introduit dans le réacteur, maintenu sous un léger courant d'azote 3390 ml de solvant, puis successivement 226 g de caprolactame sec, 395 g de lauryllactame sec, 30g d'éthylène bisstearamide et 18 g de silice finement divisée et déshydratée (Aerosil R972).

Après avoir mis en route l'agitation à 720 tr/min on chauffe progressivement jusqu'à 110°C, puis on distille sous un vide de 200 torrs 350 ml de solvant afin d'entraîner par azéotropie toute trace d'eau éventuellement présente.

Après retour à la pression atmosphérique, on introduit alors rapidement sous azote le catalyseur, 8g d'hydrure de sodium à 60% de pureté dans de l'huile, et on laisse sous agitation, toujours sous courant d'azote, pendant 60 minutes.

Le milieu réactionnel est refroidit à 75°C avant d'effectuer l'injection continue de l'activateur choisi : 30g d'isocyanate de stearyle au débit de 7,9 g/h avec une pompe doseuse. 120 minutes après le début de l'injection de l'activateur, on injecte en continu 228g de caprolactone en 4h à l'aide d'une pompe doseuse. 6 heures après le début de l'injection de l'activateur, la température est amenée à 110°C et maintenue pendant 2 heures.

La polymérisation est alors terminée. On refroidit le réacteur à 90°C et soutire par le fond le mélange de poudre et de solvant. Après essorage et séchage, on obtient, avec un rendement proche de 100%, une poudre de copolyesteramide dont la composition molaire en lactames 6, 12 et caprolactone est de 33/33/33.

La granulométrie de la poudre est centrée à 10µm et sans le moindre agglomérat. Le point de fusion mesuré en DSC est de 123-126°C ,avec une surface spécifique apparrente de 4.6 m²/g.

### EXEMPLE 2

On introduit dans le réacteur, maintenu sous un léger courant d'azote 3390 ml de solvant, puis successivement 226 g de caprolactame sec, 395 g de lauryllactame sec, 30g d'éthylène bisstearamide et 18 g de silice finement divisée et déshydratée (Aerosil R972).

Après avoir mis- en route l'agitation- à 720 tr/min on chauffe progressivement jusqu'à 110°C, puis on distille sous un vide de 200 torrs 350 ml de solvant afin d'entraîner par azéotropie toute trace d'eau éventuellement présente.

Après retour à la pression atmosphérique, on introduit alors rapidement sous azote le catalyseur, 8g d'hydrure de sodium à 60% de pureté dans de l'huile, et on laisse sous agitation, toujours sous courant d'azote, pendant 60 minutes.

Le milieu réactionnel est refroidit à 75°C avant d'effectuer l'injection continue de l'activateur choisi : 30g d'isocyanate de stearyle au débit de 5 g/h avec une pompe doseuse. 120 minutes après le début de l'injection de l'activateur, on injecte en continu 51g de caprolactone en 3h30 à l'aide d'une pompe doseuse. 5 heures 30 après le début de l'injection de l'activateur, la température est amenée à 110°C et maintenue pendant 2 heures.

La polymérisation est alors terminée. On refroidit le réacteur à 90°C et soutire par le fond le mélange de poudre et de solvant. Après essorage et séchage, on obtient, avec un rendement proche de 100%, une poudre de copolyesteramide dont la composition molaire en lactames 6, 12 et caprolactone est de 45/45/10.

La granulométrie de la poudre est centrée à 8µm et sans le moindre agglomérat. Le point de fusion mesuré en DSC est de 123-126°C ,et la surface spécifique apparrente de 4.6 m²/g.

### EXEMPLE 3

L'exemple 2 est reproduit à l'identique sauf pour le temps d'induction à l'introduction de la caprolactone qui est ici de 30 minutes contre 120 dans l'exemple 2.

Après essorage et séchage, on obtient, avec un rendement proche de 100 %, une poudre de copolyesteramide de composition identique à celle de l'exemple 2 dont la granulométrie est centrée à 8.7µm avec une répartition granulométrique de 0.6 et une surface spécifique apparente de 22 m²/g .II apparaît cependant de nombreux encrassements sur les parois du réacteur.

### EXEMPLE 4

On reproduit à l'identique les exemples 2 et 3 sauf pour le temps d'induction à l'introduction de la caprolactone qui est ici de 60 minutes. Après essorage et séchage, on obtient, avec un rendement proche de 100% une poudre de copolyesteramide de composition identique à celle des exemples 2 et 3 dont la granulométrie est centrée à 9.3 µm avec une répartition granulométrique de 3 et une surface spécifique apparente de 13.6 m²/g .De nombreux encrassements sont présents sur les parois du réacteur.

### EXEMPLE 5

On introduit dans le réacteur, maintenu sous un léger courant d'azote 3390 ml de solvant, puis successivement 226 g de caprolactame sec, 395 g de lauryllactame sec, 30g d'éthylène bisstearamide et 18 g de silice finement divisée et déshydratée (Aerosil R972).

Après avoir mis en route l'agitation à 720 tr/min on chauffe progressivement jusqu'à 110°C, puis on distille sous un vide de 200 torrs 350 ml de solvant afin d'entraîner par azéotropie toute trace d'eau éventuellement présente.

Après retour à la pression atmosphérique, on introduit alors rapidement sous azote le catalyseur, 8g d'hydrure de sodium à 60% de pureté dans de l'huile, et on laisse sous agitation, toujours sous courant d'azote, pendant 60 minutes.

Le milieu réactionnel est refroidit à 75°C avant d'effectuer l'injection continue de l'activateur choisi : 30g d'isocyanate de stearyle au débit de 4 g/h avec une pompe doseuse. 30 minutes après le début de l'injection de l'activateur, on injecte en continu 51g de caprolactone en 9h à l'aide d'une pompe doseuse. 10 heures après le début de l'injection de l'activateur, la température est amenée à 110°C et maintenue pendant 2 heures.

La polymérisation est alors terminée. On refroidit le réacteur à 90°C et soutire par le fond le mélange de poudre et de solvant. Après essorage et séchage, on obtient, avec un rendement proche de 100%, une poudre de copolyesteramide dont la composition molaire en lactames 6, 12 et caprolactone est de 45/45/10.

La granulométrie de la poudre est centrée à 7.25 µm avec une répartition granulométrique de 0.76 et un point de fusion mesuré en DSC de 134 °C et une surface spécifique apparente de 19 m²/g. Les parois du réacteur présentent un fort encrassement.

### EXEMPLE 6

L'exemple 5 est reproduit à l'identique sauf la température de polymérisation qui est ici de 90°C.

La poudre obtenue présente une granulométrie de 10.4 µm et une répartition granulométrique de 0.94. On note ici encore un fort encrassement du réacteur.

### EXEMPLE 7

L'exemple 5 est reproduit à l'identique sauf la température de polymérisation qui est ici de 60°C.

La poudre obtenue présente une granulométrie de 2.9 µm et une répartition granulométrique de 0.29. Le réacteur ne présente aucun encrassement.

## Revendications

1. Procédé de préparation de poudres de copolyesteramides par polymérisation anionique dans lequel on copolymérise en solution dans un solvant au moins un lactame et au moins une lactone en présence d'un catalyseur et d'un activateur, le solvant étant un solvant du lactame et les poudres de copolyesteramides étant insolubles dans ce solvant et tel que :
on introduit d'abord le solvant et le- lactame séparement ou simultanément puis après l'élimination de l'eau éventuelle on introduit le catalyseur et ensuite on introduit l'activateur et la lactone soit en continu soit par paquets simultanément, soit alternativement un paquet d'activateur et un paquet de lactone, soit alternativement un débit continu d'activateur puis un débit continu de lactone soit toute combinaison de ces possibilités.

2. Procédé selon la revendication 1 dans lequel le lactame est choisi parmi le caprolactame et le lauryllactame.

3. Procédé selon l'une quelconque des revendications précédentes dans lequel la lactone est choisie parmi la caprolactone, la valérolactone et la butyrolactone.

4. Procédé selon l'une quelconque des revendications précédentes dans lequel le solvant est une coupe d'hydrocarbures paraffiniques dont la plage d'ébullition se trouve entre 140 et 170°C.

5. Procédé selon l'une quelconque des revendications précédentes dans lequel le catalyseur est choisi parmi le sodium, le potassium, les hydrures et les hydroxydes de métaux alcalins et les alcoolates de métaux alcalins.

6. Procédé selon l'une quelconque des revendications précédentes dans lequel l'activateur est choisi parmi les lactames-N-carboxyanilides, les isocyanates, les carbodi-imides, les cyanimides, les acyl-lactames, les triazines, les urées, les imides-N-sustituées et les esters.

7. Procédé selon l'une quelconque des revendications précédentes dans lequel on opère à la pression atmosphérique et à une température comprise entre 20°C et la température d'ébullition du solvant.

8. Procédé selon l'une quelconque des revendications précédentes dans lequel on copolymérise au moins deux lactames et au moins une lactone.

9. Procédé selon la revendication 8 dans lequel il s'agit du caprolactame, du lauryllactame et de la caprolactone.

10. Procédé selon l'une quelconque des revendications précédentes dans lequel on effectue la copolymérisation en présence d'une charge organique ou minérale finement divisée.

11. Procédé selon l'une quelconque des revendications précédentes dans lequel on effectue la copolymérisation en présence d'au moins une amide de formule R1-NH-CO-R2 dans laquelle R1 peut être remplacé par un radical R3-CO-NH- ou R3-O- et dans laquelle R1, R2, R3 désignent un radical aryle, alkyle ou cycloalkyle.

12. Procédé selon la revendication 11 dans laquelle l'amide est l'éthylène bis stéaramide (EBS) ou l'éthylène bis oléamide.

13. Poudres de copolyesteramides comprenant en moles (le total étant 100%):
■ 30 à 46% de caprolactame,
■ 30 à 46% de lauryllactame,
■ 8 à 40% de caprolactone,
et qui ont un diamètre compris entre 1 µm et 200 µm, une surface spécifique comprise entre 1 et 25 m2/g .

14. Poudres selon la revendication 13 dans lesquelles le diamètre est compris entre 1 et 60µm.

15. Poudres selon la revendication 14 dans lesquelles le diamètre est compris entre 2 et 12µm.

16. Poudres selon l'une quelconque des revendications 13 à 15 dans lesquelles la surface est comprise entre 4 et 22 m2/g.

17. Utilisation des poudres selon l'une des revendications 13 à 16 en particulier dans les papiers transferts, les cosmétiques, les revêtements.

18. Utilisation des poudres selon l'une des revendications 13 à 16 comme additif dans des caoutchoucs ou dans des poudres où elles sont utiles comme lubrifiant pendant l'injection dans un moule avant le frittage.

## Claims

1. Process for the preparation of powders formed of copolyesteramides by anionic polymerization, in which at least one lactam and at least one lactone are copolymerized in solution in a solvent in the presence of a catalyst and of an activator, the solvent being a solvent for lactam and the powders formed of copolyesteramides being insoluble in this solvent and such that:
first the solvent and the lactam are introduced, separately or simultaneously, then, after removal of the possible water, the catalyst is introduced and, subsequently, the activator and the lactone are introduced, either continuously or portionwise simultaneously or alternately a portion of activator and a portion of lactone or alternately a continuous flow of activator and then a continuous flow of lactone or any combination of these possibilities.

2. Process according to Claim 1, in which the lactam is chosen from caprolactam and lauryllactam.

3. Process according to either one of the preceding claims, in which the lactone is chosen from caprolactone, valerolactone and butyrolactone.

4. Process according to any one of the preceding claims, in which the solvent is a paraffinic hydrocarbon fraction with a boiling range lying between 140 and 170°C.

5. Process according to any one of the preceding claims, in which the catalyst is chosen from sodium, potassium, alkali metal hydrides, alkali metal hydroxides and alkali metal alkoxides.

6. Process according to any one of the preceding claims, in which the activator is chosen from lactams-N-carboxyanilides, isocyanates, carbodiimides, cyanimides, acyllactams, triazines, ureas, N-substituted imides and esters.

7. Process according to any one of the preceding claims, in which the reaction is carried out at atmospheric pressure and at a temperature of between 20°C and the boiling temperature of the solvent.

8. Process according to any one of the preceding claims, in which at least two lactams and at least one lactone are copolymerized.

9. Process according to Claim 8, in which it concerns caprolactam, lauryllactam and caprolactone.

10. Process according to any one of the preceding claims, in which the copolymerization is carried out in the presence of a finely divided organic or inorganic filler.

11. Process according to any one of the preceding claims, in which the copolymerization is carried out in the presence of at least one amide of formula R1-NH-COR2, in which R1 can be replaced by an R3-CO-NH- or R3-O- radical and in which R1, R2 and R3 denote an aryl, alkyl or cycloalkyl radical.

12. Process according to Claim 11, in which the amide is ethylenebisstearamide (EBS) or ethylenebisoleamide.

13. Powders formed of copolyesteramides comprising, in moles (the total being 100%):
■ 30 to 46% of caprolactam,
■ 30 to 46% of lauryllactam,
■ 8 to 40% of caprolactone,
which have a diameter of between 1 µm and 200 µm and a specific surface of between 1 and 25 m²/g.

14. Powders according to Claim 13, in which the diameter is between 1 and 60 µm.

15. Powders according to Claim 14, in which the diameter is between 2 and 12 µm.

16. Powders according to any one of Claims 13 to 15, in which the specific surface is between 4 and 22 m²/g.

17. Use of the powders according to one of Claims 13 to 16, in particular in pigment paper, cosmetics or coatings.

18. Use of the powders according to one of Claims 13 to 16 as additive in rubbers or in powders, where they are of use as lubricant during the injection into a mould before sintering.

## Patentansprüche

1. Verfahren zur Herstellung von Copolyesteramidpulvern durch anionische Polymerisation, bei dem man mindestens ein Lactam und mindestens ein Lacton in Lösung in einem Lösungsmittel in Gegenwart eines Katalysators und eines Aktivators copolymerisiert, wobei das Lösungsmittel ein Lösungsmittel für das Lactam ist und die Copolyesteramidpulver in diesem Lösungsmittel unlöslich sind, und zwar derart, daß man
zunächst das Lösungsmittel und das Lactam separat oder gleichzeitig einträgt, dann nach Entfernung von etwaigem Wasser den Katalysator einträgt und danach den Aktivator und das Lacton kontinuierlich oder portionsweise gleichzeitig oder alternativ dazu eine Portion Aktivator und eine Portion Lacton oder alternativ dazu einen kontinuierlichen Aktivatorstrom und dann einen kontinuierlichen Lactonstrom einträgt oder eine beliebige Kombination dieser Möglichkeiten verwendet.

2. Verfahren nach Anspruch 1, bei dem man das Lactam unter Caprolactam und Lauryllactam auswählt.

3. Verfahren nach einem der vorhergehenden Ansprüche, bei dem man das Lacton unter Caprolacton, Valerolacton und Butyrolacton auswählt.

4. Verfahren nach einem der vorhergehenden Ansprüche, bei dem es sich bei dem Lösungsmittel um eine Fraktion paraffinischer Kohlenwasserstoffe mit einem Siedebereich zwischen 140 und 170°C handelt.

5. Verfahren nach einem der vorhergehenden Ansprüche, bei dem man den Katalysator unter Natrium, Kalium, Alkalimetallhydriden und -hydroxiden und Alkalimetallalkoholaten auswählt.

6. Verfahren nach einem der vorhergehenden Ansprüche, bei dem man den Aktivator unter Lactam-N-carboxyaniliden, Isocyanaten, Carbodiimiden, Cyanimiden, Acyllactamen, Triazinen, Harnstoffen, N-substituierten Imiden und Estern auswählt.

7. Verfahren nach einem der vorhergehenden Ansprüche, bei dem man bei Normaldruck und einer Temperatur zwischen 20°C und der Siedetemperatur des Lösungsmittels arbeitet.

8. Verfahren nach einem der vorhergehenden Ansprüche, bei dem man mindestens zwei Lactame und mindestens ein Lacton copolymerisiert.

9. Verfahren nach Anspruch 8, bei dem es sich um Caprolactam, Lauryllactam und Caprolacton handelt.

10. Verfahren nach einem der vorhergehenden Ansprüche, bei dem man die Copolymerisation in Gegenwart eines feinteiligen organischen oder anorganischen Füllstoffs durchführt.

11. Verfahren nach einem der vorhergehenden Ansprüche, bei dem man die Copolymerisation in Gegenwart mindestens eines Amids der Formel R1-NH-CO-R2, worin R1 durch einen R3-CO-NH- oder R3-O-Rest substituiert sein kann und R1, R2 und R3 für einen Aryl-, Alkyl- oder Cycloalkylrest stehen, durchführt.

12. Verfahren nach Anspruch 11, bei dem es sich bei dem Amid um Ethylenbisstearamid (EBS) oder Ethylenbisoleamid handelt.

13. Copolyesteramidpulver, die in mol (Summe 100%)
■ 30 bis 46% Caprolactam,
■ 30 bis 46% Lauryllactam,
■ 8 bis 40% Caprolacton
enthalten und einen Durchmesser zwischen 1 µm und 200 µm und eine spezifische Oberfläche zwischen 1 und 25 m2/g aufweisen.

14. Pulver nach Anspruch 13, bei denen der Durchmesser zwischen 1 und 60 µm liegt.

15. Pulver nach Anspruch 14, bei denen der Durchmesser zwischen 2 und 12 µm liegt.

16. Pulver nach einem der Ansprüche 13 bis 15, bei denen die spezifische Oberfläche zwischen 4 und 22 m2/g liegt.

17. Verwendung von Pulvern nach einem der Ansprüche 13 bis 16, insbesondere in Transferpapier, Kosmetika oder Beschichtungen.

18. Verwendung von Pulvern nach einem der Ansprüche 13 bis 16 als Additiv in Kautschuken oder in Pulvern, in denen sie als Gleitmittel beim Einspritzen in eine Form vor dem Sintern nützlich sind.
